# EUROPÄISCHE PATENTSCHRIFT

(11) **EP 3 065 957 B1**
(45) Veröffentlichungstag und Bekanntmachung des Hinweises auf die Patenterteilung: **10.01.2018**
(21) Anmeldenummer: 14824343.9
(22) Anmeldetag: 04.11.2014
(51) Int. Cl.: B60D 1/06, B60D 1/24

(54) **ZUGDEICHSEL**
DRAW BAR
TIMON

(30) Priorität: 04.11.2013 AT 8402013
(43) Veröffentlichungstag der Anmeldung: 14.09.2016
(73) Patentinhaber: Scharmüller, Josef, 4892 Fornach (AT); Scharmüller, Josef, jun., 4892 Fornach (AT)
(72) Erfinder: SCHARMÜLLER, Josef, A-4892 Formach (AT); SCHARMÜLLER, Josef jun., A-4892 Formach (AT); SCHARMÜLLER, Christine, A-4892 Formach (AT)
(74) Vertreter: Gibler & Poth Patentanwälte KG
(86) Internationale Anmeldenummer: PCT/AT2014/000198
(87) Internationale Veröffentlichungsnummer: WO 2015/061818

(56) Entgegenhaltungen:
- EP-A1- 0 806 309
- GB-A- 301 388
- GB-A- 2 175 262
- GB-A- 2 339 180
- US-A- 2 723 866

## Beschreibung

Die Erfindung betrifft eine Zugdeichsel für einen Fahrzeuganhänger gemäß dem Oberbegriff des Patentanspruches 1.
Eine Zugdeichsel ist eine Vorrichtung für einen gezogenen Fahrzeuganhänger, welche dazu dient den Fahrzeuganhänger mit einem Zugfahrzeug zu koppeln. Hierbei sind insbesondere Zugdeichsel mit einer halbkugelförmigen Aufnahmepfanne bekannt, welche vorgesehen ist die Kupplungskugel eines Zugfahrzeuges aufzunehmen und dadurch eine in alle Richtungen Leicht schwenkbare Kuppelung herzustellen. Hierbei weisen derartige Kugelkupplungen weiters einen fixierbaren Niederhalter auf, welche eine zuverlässige Verbindung zwischen Aufnahmepfanne und Kupplungskugel sicherstellt. Auch bei geöffnetem Niederhalter ist oftmals weiterhin eine gesicherte Verbindung zwischen Aufnahmepfanne und Kupplungskugel gegeben, da die Aufnahmepfanne mit einem Auflagegewicht auf der Kupplungskugel aufliegt. Zum zuverlässigen Lösen der Kuppelung ist daher ein Hantieren an der Kupplung, insbesondere ein Absetzen der Aufnahmepfanne von der Kupplungskugel, notwendig.
Aus der EP 0 806 309 A1 ist eine Zugdeichsel mit einer halbkugelförmigen Aufnahmepfanne gemäß dem Oberbegriff von Anspruch 1 bekannt, welche höhenverstellbar ist. Hierbei ist die Aufnahmepfanne über einen parallelogrammartig ausgebildeten und arretierbaren Schwenkarm mit dem Deichselträger verbunden.
Aus der GB 2 175 262 A ist eine Zugdeichsel mit einer beweglichen Aufnahmepfanne bekannt. Die Aufnahmepfanne ist in einer Entkoppelungsposition nach federbelastet oben geschwenkt. Durch eine Kupplungskugel mit nach unten gerichteten Gewichtskraft wird die Aufnahmepfanne nach unten in eine Betriebsposition geschwenkt, wobei in dieser Betriebsposition die Kupplungskugel durch die Aufnahmepfanne und ein Lagefestes Gegenstück gehalten wird.
Aus der GB 301 388 A ist eine Fahrzeugkupplung mit einer lagefesten halbkugelförmigen Aufnahmepfanne bekannt, wobei die Kupplungskugel in der Aufnahmepfanne durch ein bewegliches Gegenstück fixiert wird.
Aus der GB 2 339 180 A ist eine Fahrzeugkupplung mit einer lagefesten Aufnahmepfanne bekannt, wobei ein schwenkbar gelagerter Teil an der Aufnahmepfanne ausgebildet ist die Kupplungskugel in der Aufnahmeöffnung formschlüssig zu halten.
Aus der US 2 723 866 A ist eine Fahrzeugkupplung mit einer Kupplungskugel bekannt, wobei die Aufnahme aus zwei nicht halbkugelförmigen und zueinander bewegbaren Teilen ausgebildet ist, wobei der obere Teil der Aufnahmepfanne schwenkbar ist.
Nachteilig daran ist, dass bei einem Brand auf dem Fahrzeuganhänger ein Zugang zu der Kupplung oftmals verhindert ist oder nur unter Gefahr möglich ist, weshalb die Kupplung nicht zuverlässig getrennt werden kann. Ein derartiges Feuer kann beispielsweise bei Ernte von besonders trockenem Heu oder anderen leicht entzündlichen Gütern ausbrechen. Hierbei kann das Feuer von dem Fahrzeuganhänger auf das Zugfahrzeug übergreifen, wodurch das gesamte Fahrzeuggespann ein Raub der Flammen wird.
Aufgabe der Erfindung ist es daher eine Zugdeichsel der eingangs genannten Art anzugeben, mit welcher die genannten Nachteile vermieden werden können, mit welcher auch in Notsituationen die Verbindung von Fahrzeuganhänger und Zugfahrzeug zuverlässig gelöst werden kann.
Erfindungsgemäß wird dies durch die Merkmale des Patentanspruches 1 erreicht. Dadurch ergibt sich der Vorteil, dass die Verbindung zwischen Fahrzeuganhänger und Zugfahrzeug auch in einem Notfall schnell und zuverlässig getrennt werden kann, wobei eine zuverlässige Trennung kein Bedienpersonal im Bereich der Kupplung selbst erfordert. Durch die Sicherheitsvorrichtung kann die Aufnahmepfanne in eine Position gebracht werden, bei welcher die Kupplungskugel aus der Aufnahmepfanne gleiten kann. Hierbei ist die Aufnahmepfanne in der Betriebsposition in einer für eine Aufnahmepfanne üblichen Orientierung, bei welcher im gekuppelten Zustand die obere Hemisphäre der Kupplungskugel vollständig in der Aufnahmepfanne angeordnet ist. Bei Betätigung der Sicherheitsvorrichtung wird die Aufnahmepfanne in einer der Aufnahmeöffnung entgegengesetzten Richtung verschwenkt, wodurch die Verbindung gelöst wird. Selbst wenn die Aufnahmepfanne in der Entkoppelungsposition noch auf der Kupplungskugel lastet, beispielsweise weil auf der Zugdeichsel eine Kraft nach unten lastet, liegt die Aufnahmepfanne derart verkippt auf der Kupplungskugel auf, dass die Kupplungskugel durch Aufbringen einer Zugkraft in Fahrtrichtung, beispielsweise durch ein Anfahren des Zugfahrzeuges, aus der Aufnahmepfanne gleiten kann. Hierbei kann selbst bei Last der Zugdeichsel auf der Kupplungskugel 4 die Verbindung zuverlässig gelöst werden. Weiters kann dadurch auch das An- und Abkuppeln ohne Stützfuß oder derartige Hilfsmittel erleichtert werden.

Weiters betrifft die Erfindung ein Verfahren zum Trennen einer Verbindung zwischen einem Zugfahrzeug und einem Fahrzeuganhänger gemäß dem Patentanspruch 14.

Aufgabe der Erfindung ist es daher weiters ein Verfahren anzugeben, mit welcher die genannten Nachteile vermieden werden können, mit welcher auch in Notsituationen die Verbindung von Fahrzeuganhänger und Zugfahrzeug zuverlässig gelöst werden kann.

Die Vorteile des Verfahrens entsprechen den Vorteilen der Zugdeichsel.

Die Unteransprüche betreffen weitere vorteilhafte Ausgestaltungen der Erfindung.

Ausdrücklich wird hiermit auf den Wortlaut der Patentansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich eine bevorzugte Ausführungsform beispielhaft dargestellt ist, näher beschrieben. Dabei zeigt:
Fig. 1 eine bevorzugte Ausführungsform einer Zugdeichsel in axonometrischer Darstellung;
Fig. 2 die bevorzugte Ausführungsform der Zugdeichsel in einer Betriebsposition in Seitenansicht;
Fig. 3 die bevorzugte Ausführungsform der Zugdeichsel in einer Entkoppelungsposition in Seitenansicht;
Fig. 4 die bevorzugte Ausführungsform der Zugdeichsel und ein Niederhalter in der Betriebsposition in Seitenansicht; und
Fig. 5 die Anordnung aus Fig. 4 in der Entkoppelungsposition in Seitenansicht.

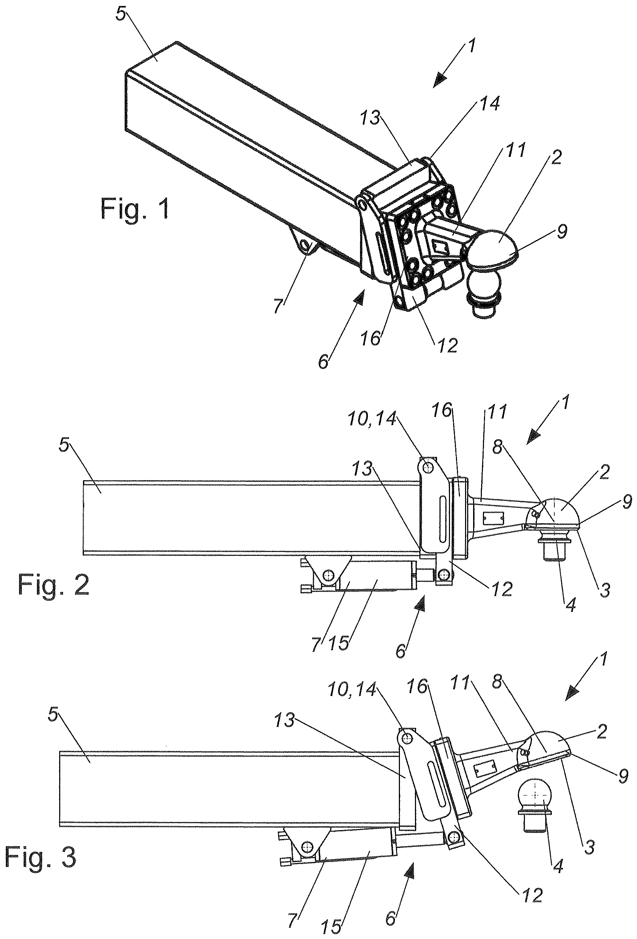

Die Fig. 1 bis 5 zeigen eine bevorzugte Ausführungsform einer Zugdeichsel 1 für einen Fahrzeuganhänger umfassend eine halbkugelförmige Aufnahmepfanne 2 mit einer Aufnahmeöffnung 3 für die Aufnahme einer Kupplungskugel 4 und einen Deichselträger 5 zum Verbinden der Aufnahmepfanne 2 mit dem Fahrzeuganhänger.

Eine Zugdeichsel 1 ist eine Vorrichtung, welche bei einem gezogenen Fahrzeuganhänger vorgesehen ist diesen mit einem Zugfahrzeug zu verbinden, und die Zugkräfte von dem Zugfahrzeug an den Fahrzeuganhänger weiterzuleiten.

Die Zugdeichsel 1 weist eine halbkugelförmige Aufnahmepfanne 2, welche auch unter dem Begriff Kupplungspfanne bekannt ist, auf. Die Aufnahmepfanne 2 weist besonders bevorzugt eine im Wesentlichen halbkugelförmige Ausnehmung auf, welche vorgesehen ist die Kupplungskugel 4 des Zugfahrzeuges aufzunehmen. Hierbei berandet die Aufnahmepfanne 2 eine Aufnahmeöffnung 3, durch welche die Kupplungskugel 4 in die Ausnehmung der Aufnahmepfanne 2 eingeführt werden kann. Die Ausnehmung wird hierbei von einer Gleitfläche der Aufnahmepfanne 2 berandet, welche im gekoppelten Zustand mit der Kupplungskugel 4 in Kontakt ist.

Insbesondere kann vorgesehen sein, dass die Aufnahmepfanne 2 einen zylinderförmigen Kragen aufweist, und dass die Aufnahmepfanne 2 mit dem Kragen über einen Großkreis der Kupplungskugel 4 hinaus ragt.

Die Zugdeichsel 1 weist weiter einen Deichselträger 5 auf. Der Deichselträger 5 ist ein im Wesentlichen längliches Bauteil, welches die Aufnahmepfanne 2 mit dem restlichen Fahrzeuganhänger verbindet, und insbesondere die Kräfte von der Aufnahmepfanne 2 an den restlichen Fahrzeuganhänger weiterleitet. Hierbei sind dem Fachmann eine Vielzahl an unterschiedlichen Deichselträgergeometrien bekannt. Der Deichselträger 5 kann bei einem Fahrzeuganhänger mit einer zentral angeordneten Achse fest mit dem Fahrzeuganhänger verbunden sein. Bei einem mehrachsigen Fahrzeuganhänger kann der Deichselträger 5 mit einer Drehschemellenkung beweglich an dem Lenkkranz der Vorderachse befestigt sein.

Der Deichselträger 5 kann insbesondere als gerader Träger ausgebildet sein. Der Deichselträger 5 kann insbesondere als Deichselrohr ausgeführt sein. Alternativ kann der Deichselträger 5 dreiecks- oder gabelförmig sein.

Vorgesehen ist, dass die Aufnahmepfanne 2 mittels einer Sicherheitsvorrichtung 6 verschwenkbar mit dem Deichselträger 5 verbunden ist, dass die Aufnahmepfanne 2 mittels einer Betätigungseinrichtung 7 der Sicherheitsvorrichtung 6 in einer Betriebsposition fixierbar ist, und dass die Aufnahmepfanne 2 gegenüber dem Deichselträger 5 mittels der Betätigungseinrichtung 7 aus der Betriebsposition in einer der Aufnahmeöffnung 3 abgewandten Richtung in eine Entkoppelungsposition verschwenkbar ist. Die Betätigungseinrichtung 7 kann insbesondere fernbedienbar sein.

Weiters ist ein Fahrzeuganhänger mit dieser Zugdeichsel vorgesehen.

Weiter kann insbesondere ein Fahrzeuggespann mit dem Fahrzeuganhänger und einem Zugfahrzeug mit einer Fahrerkabine vorgesehen sein, wobei die Betätigungseinrichtung 7 der Sicherheitsvorrichtung 6 von der Fahrerkabine aus betätigbar ist. Hierbei kann in der Fahrerkabine ein zusätzliches Bedienelement angeordnet sein, welches mit der Betätigungseinrichtung 7 koppelbar ist.

Dadurch ergibt sich der Vorteil, dass die Verbindung zwischen Fahrzeuganhänger und Zugfahrzeug auch in einem Notfall schnell und zuverlässig getrennt werden kann, wobei eine zuverlässige Trennung kein Bedienpersonal im Bereich der Kupplung selbst erfordert. Durch die Sicherheitsvorrichtung 6 kann die Aufnahmepfanne 2 in eine Position gebracht werden, bei welcher die Kupplungskugel 4 aus der Aufnahmepfanne 2 gleiten kann. Hierbei ist die Aufnahmepfanne 2 in der Betriebsposition in einer für eine Aufnahmepfanne 2 üblichen Orientierung, bei welcher im gekuppelten Zustand die obere Hemisphäre der Kupplungskugel 4 vollständig in der Aufnahmepfanne 2 angeordnet ist. Bei Betätigung der Sicherheitsvorrichtung 6 wird die Aufnahmepfanne 2 in einer der Aufnahmeöffnung 3 entgegengesetzten Richtung verschwenkt, wodurch die Verbindung gelöst wird. Selbst wenn die Aufnahmepfanne 2 in der Entkoppelungsposition noch auf der Kupplungskugel 4 lastet, beispielsweise weil auf der Zugdeichsel 1 eine Kraft nach unten lastet, liegt die Aufnahmepfanne 2 derart verkippt auf der Kupplungskugel 4 auf, dass die Kupplungskugel 4 durch Aufbringen einer Zugkraft in Fahrtrichtung, beispielsweise durch ein Anfahren des Zugfahrzeuges, aus der Aufnahmepfanne 2 gleiten kann. Hierbei kann selbst bei Last der Zugdeichset 1 auf der Kupplungskugel 4 die Verbindung zuverlässig gelöst werden. Weiters kann dadurch auch das An- und Abkuppeln ohne Stützfuß oder derartige Hilfsmittel erleichtert werden.

Weiters ist ein Verfahren zum Trennen einer Verbindung zwischen einem Zugfahrzeug und einem Fahrzeuganhänger vorgesehen, wobei in einem verbundenen Zustand des Zugfahrzeuges mit dem Fahrzeuganhänger die Kupplungskugel 4 des Zugfahrzeuges in der Aufnahmeöffnung 3 der halbkugelförmigen Aufnahmepfanne 2 des Fahrzeuganhängers angeordnet ist, welche Aufnahmepfanne 2 mit dem Deichselträger 5 verbunden ist, wobei zum Trennen der Verbindung zwischen dem Zugfahrzeug und dem Fahrzeuganhänger, die Aufnahmepfanne 2 gegenüber dem Deichselträger 5 in einer der Aufnahmeöffnung 3 abgewandten Richtung geschwenkt wird. Zum Trennen der kann dann auf die Kupplungskugel 4 eine Zugkraft in Fahrtrichtung aufgebracht werden, wobei die Kupplungskugel 4 aus der Aufnahmeöffnung 3 gleiten kann, selbst wenn die Aufnahmepfanne 2 durch das Gewicht des Fahrzeuganhängers auf die Kupplungskugel 4 gedrückt wird. Die Kupplungskugel 4 kann beim Verschwenken weiterhin in der Aufnahmeöffnung 3 sein, wobei die Ausrichtung der Kupplungskugel 4 zu der Aufnahmepfanne 2 geändert wird.

Die Sicherheitsvorrichtung 6 ist ein Teil der Zugdeichsel 1 und zwischen Aufnahmepfanne 2 und Deichselträger 5 angeordnet. Die Sicherheitsvorrichtung 6 weist eine Betätigungsvorrichtung 7 auf, welche dazu ausgebildet ist die Aufnahmepfanne 2 gegenüber dem Deichselträger 5 vorgebbar zwischen der Betriebsposition und der Entkoppelungsposition zu verschwenken. Die Betätigungsvorrichtung 7 kann insbesondere derart ausgebildet sein, dass diese vom Zugfahrzeug aus betätigt werden kann, insbesondere über elektrische, hydraulische oder mechanische Betätigung.

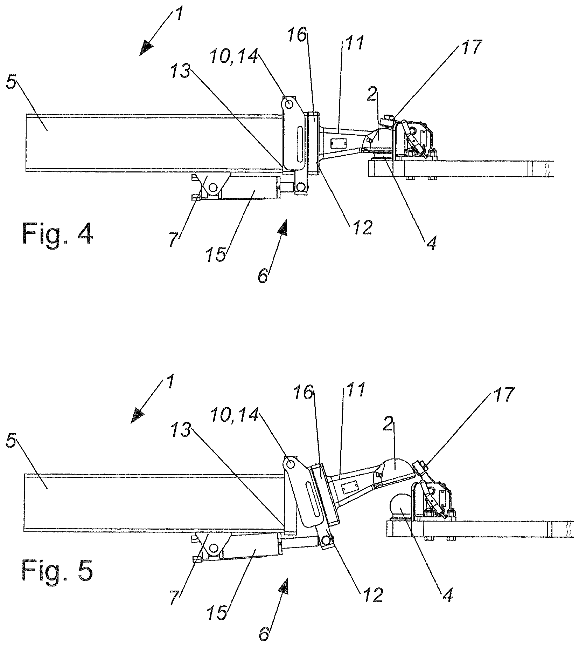

Die Betriebsposition ist eine Stellung der Aufnahmepfanne 2 oder Zustand der Zugdeichsel 1, welche beispielsweise beim Ziehen des Fahrzeuganhängers durch das Zugfahrzeug eingenommen wird. Die Betriebsposition entspricht der Stellung zwischen Deichselträger 5 und Aufnahmepfanne 2, wie sie bei einer herkömmlichen Zugdeichsel 1 üblich ist. Hierbei kann insbesondere vorgesehen sein, dass die Aufnahmeöffnung 3 - in Betriebslage gesehen - horizontal angeordnet ist. Die Betriebslage ist hierbei jene Lage, bei welcher sich das Fahrzeuggespann aus Fahrzeuganhänger und Zugfahrzeug auf einer Ebene stehen. Hierbei kann die Aufnahmepfanne 2 derart orientiert sein, dass eine obere Hemisphäre der Kupplungskugel 4 in der Aufnahmepfanne 2 anordenbar ist. Die Betätigungseinrichtung 7 der Sicherheitsvorrichtung 6 kann insbesondere dazu ausgebildet sein, die Aufnahmepfanne 2 zuverlässig in der Betriebsposition zu halten. Fig. 2 und 4 zeigen die bevorzugte Ausführungsform der Zugdeichsel 1 in der Betriebsposition.

Die Entkoppelungsposition ist eine Stellung der Aufnahmepfanne 2 oder Zustand der Zugdeichsel 1, bei welcher die Verbindung zwischen Aufnahmepfanne 2 und Kupplungskugel 4 ohne Bedienpersonal im Bereich der Zugdeichsel 1 getrennt werden kann. In der Entkoppelungsposition ist die Aufnahmepfanne 2 zu dem Deichselträger gegenüber der Betriebsposition in eine der Aufnahmeöffnung entgegengesetzten Richtung, also auch einer von der Kupplungskugel 4 wegführenden Richtung, verschwenkt, wobei diese Verschwenkung insbesondere durch die Betätigungseinrichtung 7 aktiv durchgeführt werden kann. Fig. 1, 3 und 5 zeigen die bevorzugte Ausführungsform der Zugdeichsel 1 in der Entkoppelungsposition.

Insbesondere kann vorgesehen sein, dass das Zugfahrzeug einen Niederhalter 17 aufweist. Hierbei kann besonders bevorzugt vorgesehen sein, dass der Niederhalter 17 ebenfalls von der Fahrerkabine aus betätigbar ist. Der Niederhalter kann insbesondere fernbedienbar sein.

Besonders bevorzugt kann vorgesehen sein, dass eine Schwenkachse 10 der Sicherheitsvorrichtung 6 - in Betriebslage gesehen - horizontal und quer zu einer Längsrichtung des Deichselträger 5 verläuft. Die Schwenkachse 10 der Sicherheitsvorrichtung 6 entspricht der Achse, entlang welcher die Aufnahmepfanne 2 gegenüber dem Deichselträger 5 verschwenkt wird. Die Längsrichtung des Deichselträgers 5 entspricht der vorgesehenen Richtung, entlang welcher die Zugkräfte wirken. Bei einem geraden Deichselträger 5 entspricht dies der Längsachse des Deichselträgers 5. Bei einem dreiecksförmigen Deichselträger 5 entspricht dies einer durch die Mitte verlaufenden Geraden. Die Längsrichtung des Deichselträgers 5 entspricht bei einem geradeaus fahrendem Fahrzeuggespann insbesondere der Geradeausrichtung.

Besonders bevorzugt kann vorgesehen sein, dass in der Betriebsposition eine parallel zu der Längsrichtung des Deichselträgers 5 und durch einen Mittelpunkt 8 der Aufnahmepfanne 2 verlaufende Gerade einen dem Deichselträger 5 abgewandten ersten Bereich 9 der Aufnahmepfanne 2 schneidet, und dass in der Entkoppelungsposition diese Gerade an dem ersten Bereich 9 der Aufnahmepfanne 2 vorbei führt. Mit dem Mittelpunkt 8 der Aufnahmepfanne 2 ist hierbei jener Punkt gemeint, um welche die Aufnahmepfanne 2 um die Kupplungskugel 4 schwenkbar ist, also auch der Mittepunkt der Kupplungskugel 4 ist. In der Betriebsposition ist ausgehend von dem Mittelpunkt 8 in Richtung der Längsrichtung und vom Fahrzeuganhänger weg, also in Richtung des Zugfahrzeuges, ein Teil der Aufnahmepfanne 2, also jener erste Bereich 9, angeordnet. Bei einem Zug des Zugfahrzeuges auf den Fahrzeuganhänger entlang der Längsrichtung des Deichselträger 5 ist dieser erste Bereich 9 auch jener Bereich, an welchem die Kupplungskugel die Zugkraft überträgt. In der Entkoppelungsposition wird die Aufnahmepfanne 2 derart verschwenkt, dass dieser Bereich freigelegt wird, wodurch auch bei einem aufliegenden Aufnahmepfanne 2 die Kupplungskugel 4 durch ein Anfahren von dem Zugfahrzeuges aus der Aufnahmepfanne 2 gleiten kann. Dies kann beispielsweise der Fall sein, wenn auf der Zugdeichsel eine Kraft nach unten wirkt.

Bevorzugt kann vorgesehen sein, dass ein Schwenkwinkel zwischen der Betriebsposition und der Entkoppelungsposition zwischen 10° und 45°, insbesondere zwischen 15° und 30°, beträgt. Hierbei hat sich gezeigt, dass bei einem derartigen Schwenkwinkel ein zuverlässiges Entkoppeln möglich ist.

Insbesondere kann vorgesehen sein, dass die Aufnahmepfanne 2 über einen Steg 11 mit der Sicherheitsvorrichtung 6 verbunden ist. Dadurch kann ein Platz zwischen Sicherheitsvorrichtung 6 und Aufnahmepfanne 2 geschaffen werden, wodurch die Sicherheitsvorrichtung 6 den Schwenkbereich der Zugdeichsel 1 zu dem Zugfahrzeug nicht einschränkt. Eine Längserstreckung des Steges 11 kann in der Betriebsposition im Wesentlichen parallel zu der Längsrichtung des Deichselträgers 5 sein.

Besonders bevorzugt kann vorgesehen sein, dass ein Abstand von der Aufnahmepfanne 2 zu der Sicherheitsvorrichtung 6, besonders bevorzugt zu der Schwenkachse 10 der Sicherheitsvorrichtung 6, das Einfache bis Fünffache eines Durchmessers der Aufnahmeöffnung 3 beträgt. Weiters kann vorgesehen sein, dass dieser Abstand das Halbfache bis Zehnfache des Durchmessers der Aufnahmeöffnung 3 beträgt. Der Durchmesser der Aufnahmeöffnung 3 kann hierbei insbesondere im Wesentlichen dem Durchmesser der Kupplungskugel 4 entsprechen. Die Aufnahmepfanne 2 kann daher insbesondere mit anderen Worten nah an der Sicherheitsvorrichtung 6, und damit auch an der Schwenkachse 10 der Sicherheitsvorrichtung 6 angeordnet sein. Hierbei hat sich gezeigt, dass die auf die Sicherheitsvorrichtung 6 wirkende Hebelkräfte gering gehalten werden kann. Dadurch kann die Sicherheitsvorrichtung 6 zuverlässig in der Betriebsposition gehalten werden, ohne dass weitere aufwendige Verriegelungsvorkehrungen notwendig sind.

Insbesondere kann vorgesehen sein, dass die Sicherheitsvorrichtung 6 im Deichselträger 5 integriert ist.

Bevorzugt kann vorgesehen sein, dass die Aufnahmepfanne 2 zumindest mittelbar an einem ersten Teil 12 der Sicherheitsvorrichtung 6 befestigt ist, dass ein zweiter Teil 13 der Sicherheitsvorrichtung 6 an dem Deichselträger 5 befestigt ist, und dass der erste Teil 12 mittels eines Drehgelenkes 14 mit dem zweiten Teil 13 verschwenkbar verbunden ist. Die Sicherheitsvorrichtung 6 umfasst daher zwei verschwenkbar miteinander verbundene Teile 12,13, welche ihrerseits wiederum mit dem Deichselträger 5 oder zumindest mittelbar mit der Aufnahmepfanne 2 verbunden sind. Die Sicherheitsvorrichtung 6 kann hierbei insbesondere als Klappe ausgebildet sein. Durch diesen Aufbau kann die Sicherheitsvorrichtung 6 einfach mit bestehenden Komponenten einer Zugdeichsel 1 kombiniert werden.

Insbesondere kann vorgesehen sein, dass die Aufnahmepfanne 2 mittels des Steges 11 an einem Flansch 16 angeformt ist, wobei dieses eine insbesondere eine bereits bekannte Komponente darstellen kann, und dass der Flansch 16 an dem ersten Teil 12 befestigt, insbesondere verschraubt, ist.

Alternativ kann vorgesehen sein, dass der Steg 11 oder der Flansch 16 an dem ersten Teil 12 verschweißt ist.

Weiters kann vorgesehen sein, dass der zweite Teil 13 an einem an sich bekanntem Deichselträger 5 befestigt, insbesondere verschraubt oder verschweißt, ist.

Der erste Teil 12 und/oder der Zweite Teil 13, können insbesondere als Platten ausgebildet sein, welche besonders bevorzugt im Wesentlichen gleich groß sind.

Insbesondere kann vorgesehen sein, dass die Teile 12,13 der Sicherheitsvorrichtung 6 an einem Ende der Teile 12,13 mit dem Drehgelenk 14 verbunden sind, und dass die Betätigungseinrichtung 7 an einem diesem Ende gegenüberliegenden Ende der Teile 12,13 angeordnet ist. Dadurch kann eine günstige Hebelwirkung mit der Betätigungseinrichtung 7 erreicht werden.

Bevorzugt kann vorgesehen sein, dass in der Betriebsposition der erste Teil 12 am zweiten Teil 13 großflächig aufliegt. Hierdurch kann eine gute Kraftübertragung der Zugdeichsel 1 in der Betriebsposition im Bereich der Sicherheitsvorrichtung 6 über die Kontaktfläche zwischen den beiden Teilen 12,13 erreicht werden, wobei die Betätigungseinrichtung 7 entlastet werden kann.

Insbesondere kann vorgesehen sein, dass der erste Teil 12 und der zweite Teil 13 Fortsätze und zu den Fortsätzen gegengleiche Ausnehmungen aufweisen, welche in der Betriebsposition ineinander eingreifen. Dadurch kann die Betätigungseinrichtung 7 und das Drehgelenk 14 in der Betriebsposition entlastet werden, da hierbei insbesondere Scherkräfte in der Ebene der Kontaktfläche der Teile 12,13 durch die Fortsätze und den Ausnehmungen aufgenommen werden können.

Bevorzugt kann vorgesehen sein, dass die Betätigungseinrichtung 7 einen Hydraulikzylinder 15 umfasst. Der Hydraulikzylinder 15 kann insbesondere im Wesentlichen parallel zu der Längsrichtung des Deichselträgers 5 angeordnet sein, wobei der Hydraulikzylinder 15 in der Betriebsposition in einem eingefahrenen Zustand, und in der Entkoppelungsposition in einem ausgefahrenen Zustand sein kann. Ein Hydraulikzylinder 15 hat den Vorteil, dass dieser einfach mit einer Hydraulik des Zugfahrzeuges gekoppelt werden kann, welche üblicherweise bereits vorhanden ist. Hierbei muss die Leistung zur Betätigung der Betätigungseinrichtung 7 nicht im Bereich der Sicherheitsvorrichtung 6 aufgebracht werden, sondern kann vom Zugfahrzeug stammen, wodurch die Zugdeichsel 1 wesentlich einfacher ausgebildet sein kann.

Besonders bevorzugt kann vorgesehen sein, dass der Hydraulikzylinder 15 Hydraulikleitungen aufweist, welche zumindest mittelbar mit einer Hydraulik des Zugfahrzeuges koppelbar ist. Dadurch kann der Hydraulikzylinder 15 einfach vom Zugfahrzeug aus betätigt werden.

Insbesondere kann vorgesehen sein, dass in der Fahrerkabine des Zugfahrzeuges ein Bedienelement angeordnet ist, und dass das Bedienelement mit der Betätigungsvorrichtung 7 hydraulisch koppelbar ist.

Alternativ kann vorgesehen sein, dass die Betätigungseinrichtung 7 einen Elektromotor umfasst, beispielsweise ein Spindeltrieb. Hierbei kann die Betätigung elektrisch von der Fahrerkabine des Zugfahrzeuges aus erfolgen.

Die Betätigungseinrichtung 7 kann insbesondere an einem Ende der Betätigungseinrichtung 7 zumindest mittelbar, und insbesondere gelenkig, mit der Aufnahmepfanne 2, und an einem anderen Ende der Betätigungseinrichtung 7 zumindest mittelbar, und insbesondere gelenkig, mit dem Deichselträger 2 verbunden sein. Zumindest mittelbar bedeutet hierbei, dass das jeweilige Ende mit einem Teil gelenkig verbunden ist, welcher fest zu der Aufnahmepfanne 2 beziehungsweise zu dem Deichselträger 2 angeordnet ist.

Besonders bevorzugt kann vorgesehen sein, dass die Betätigungseinrichtung 7 ein Sicherungselement aufweist, dass das Sicherungselement in einer Rastposition die Aufnahmepfanne 2 in der Betriebsposition fixiert, und in einer Freigabestellung eine Verschwenkung der Aufnahmepfanne 2 ermöglicht. Dadurch kann auch bei einem Versagen der Hydraulik die Aufnahmepfanne 2 in der Betriebsposition gehalten werden.

Besonders bevorzugt kann vorgesehen sein, dass das Sicherungselement durch einen Bowdenzug von der Fahrerkabine des Zugfahrzeuges aus betätigbar ist. Insbesondere kann das Zugfahrzeug eine Koppelvorrichtung aufweisen, mit welcher der Bowdenzug des Sicherungselementes verbunden werden kann, und welche Koppelvorrichtung von der Fahrerkabine des Zugfahrzeuges aus durch ein Bedienelement betätigbar ist.

Das Sicherungselement kann insbesondere in Richtung der Schwenkachse 10 beweglich gelagert sein. Durch das Sicherungselement kann Hydraulikzylinder 15 oder ein anderer Antrieb in der Betriebsposition entlastet werden.

Insbesondere kann vorgesehen sein, dass das Sicherungselement ein Sicherungsbolzen ist.

Hierbei kann vorgesehen sein, dass der erste Teil 12 und der zweite Teil 13 jeweils eine Durchbrechung aufweisen, welche in der Betriebsposition miteinander fluchten. Hierbei kann das Sicherungselement beide Durchbrechung durchdringen und somit die Aufnahmepfanne 2 in der Betriebsposition fixieren. Durch ein Entfernen des Sicherungselementes aus zumindest einer Durchbrechung wird die Aufnahmepfanne 2 bezüglich dem Deichselträger 5 verschwenkbar.

Alternativ kann vorgesehen sein, dass das Sicherungselement einen Kolben des Hydraulikzylinders 15 fixiert.

## Patentansprüche

1. Zugdeichsel (1) für einen Fahrzeuganhänger umfassend eine halbkugelförmige Aufnahmepfanne (2) mit einer Aufnahmeöffnung (3) für die Aufnahme einer Kupplungskugel (4) und einen Deichselträger (5) zum Verbinden der Aufnahmepfanne (2) mit dem Fahrzeuganhänger, wobei die Aufnahmepfanne (2) mittels einer Sicherheitsvorrichtung (6) verschwenkbar mit dem Deichselträger (5) verbunden ist, wobei die Aufnahmepfanne (2) mittels einer Betätigungseinrichtung (7) der Sicherheitsvorrichtung (6) in einer Betriebsposition fixierbar ist, wobei die Aufnahmepfanne (2) gegenüber dem Deichselträger (5) mittels der Betätigungseinrichtung (7) aus der Betriebsposition in einer der Aufnahmeöffnung (3) abgewandten Richtung in eine Entkoppelungsposition verschwenkbar ist, wobei in der Betriebsposition eine parallel zu einer Längsrichtung des Deichselträger (5) und durch einen Mittelpunkt (8) der Aufnahmepfanne (2) verlaufende Gerade einen dem Deichselträger (5) abgewandten ersten Bereich (9) der Aufnahmepfanne (2) schneidet, **dadurch gekennzeichnet, dass** ein Abstand von der Aufnahmepfanne (2) zu der Sicherheitsvorrichtung (6) das Halbfache bis Zehnfache eines Durchmessers der Aufnahmeöffnung (3) beträgt, dass in der Entkoppelungsposition die parallel zu der Längsrichtung des Deichselträger (5) und durch den Mittelpunkt (8) der Aufnahmepfanne (2) verlaufende Gerade an dem ersten Bereich (9) der Aufnahmepfanne (2) vorbei führt, und dass eine Ausrichtung der Aufnahmepfanne (2) in der Entkoppelungsposition gegenüber der Betriebsposition verkippt ist.

2. Zugdeichsel (1) nach Anspruch 1, **dadurch gekennzeichnet, dass** der Abstand von der Aufnahmepfanne (2) zu der Sicherheitsvorrichtung (6) das Einfache bis Fünffache des Durchmessers der Aufnahmeöffnung (3) beträgt.

3. Zugdeichsel (1) nach Anspruch 1 oder 2, **dadurch gekennzeichnet, dass** ein Schwenkwinkel zwischen der Betriebsposition und der Entkoppelungsposition zwischen 10° und 45°, insbesondere zwischen 15° und 30°, beträgt.

4. Zugdeichsel (1) nach einem der Ansprüche 1 bis 3, **dadurch gekennzeichnet, dass** eine Schwenkachse (10) der Sicherheitsvorrichtung (6) - in Betriebslage gesehen - horizontal und quer zu einer Längsrichtung des Deichselträger (5) verläuft.

5. Zugdeichsel (1) nach einem der Ansprüche 1 bis 4, **dadurch gekennzeichnet, dass** die Aufnahmepfanne (2) über einen Steg (11) mit der Sicherheitsvorrichtung (6) verbunden ist.

6. Zugdeichsel (1) nach einem der Ansprüche 1 bis 5, **dadurch gekennzeichnet, dass** die Aufnahmepfanne (2) zumindest mittelbar an einem ersten Teil (12) der Sicherheitsvorrichtung (6) befestigt ist, dass ein zweiter Teil (13) der Sicherheitsvorrichtung (6) an dem Deichselträger (5) befestigt ist, und dass der erste Teil (12) mittels eines Drehgelenkes (14) mit dem zweiten Teil (13) verschwenkbar verbunden ist.

7. Zugdeichsel (1) nach Anspruch 6, **dadurch gekennzeichnet, dass** die Teile (12,13) der Sicherheitsvorrichtung (6) an einem Ende der Teile (12,13) mit dem Drehgelenk (14) verbunden sind, und dass die Betätigungseinrichtung (7) an einem diesem Ende gegenüberliegenden Ende der Teile (12,13) angeordnet ist.

8. Zugdeichsel (1) nach Anspruch 6 oder 7, **dadurch gekennzeichnet, dass** in der Betriebsposition der erste Teil (12) am zweiten Teil (13) großflächig aufliegt.

9. Zugdeichsel (1) nach einem der Ansprüche 1 bis 8, **dadurch gekennzeichnet, dass** die Betätigungseinrichtung (7) einen Hydraulikzylinder (15) umfasst.

10. Zugdeichsel (1) nach einem der Ansprüche 1 bis 8, **dadurch gekennzeichnet, dass** die Betätigungseinrichtung (7) ein, insbesondere durch einen Bowdenzug betätigbaren, Sicherungselement aufweist, dass das Sicherungselement in einer Rastposition die Aufnahmepfanne (2) in der Betriebsposition fixiert, und in einer Freigabestellung eine Verschwenkung der Aufnahmepfanne (2) ermöglicht.

11. Fahrzeuganhänger mit einer Zugdeichsel (1) nach einem der Ansprüche 1 bis 10.

12. Fahrzeuggespann mit einem Fahrzeuganhänger nach Anspruch 11 und einem Zugfahrzeug mit einer Fahrerkabine, **dadurch gekennzeichnet, dass** die Betätigungseinrichtung (7) der Sicherheitsvorrichtung (6) von der Fahrerkabine aus betätigbar ist.

13. Verfahren zum Trennen einer Verbindung zwischen einem Zugfahrzeug und einem Fahrzeuganhänger, wobei in einem verbundenen Zustand des Zugfahrzeuges mit dem Fahrzeuganhänger eine Kupplungskugel (4) des Zugfahrzeuges in einer Aufnahmeöffnung (3) einer halbkugelförmige Aufnahmepfanne (2) des Fahrzeuganhängers angeordnet ist, welche Aufnahmepfanne (2) mit einem Deichselträger (5) verbunden ist, wobei zum Trennen der Verbindung zwischen dem Zugfahrzeug und dem Fahrzeuganhänger die Aufnahmepfanne (2) gegenüber dem Deichselträger (5) in einer der Aufnahmeöffnung (3) abgewandten Richtung in eine Entkoppelungsposition geschwenkt und dabei verkippt wird, wobei die Kupplungskugel (4) in der Entkoppelungsposition aus der Aufnahmepfanne (2) gleitet.

## Claims

1. A drawbar (1) for a vehicle trailer comprising a hemispherical receptacle socket (2) having a receptacle opening (3) for accommodating a coupling ball (4) and a drawbar support (5) for connecting the receptacle socket (2) to the vehicle trailer, wherein the receptacle socket (2) is pivotably connected to the drawbar support (5) by means of a security device (6), wherein the receptacle socket (2) is fixable by means of an actuating unit (7) of the security device (6) in an operating position, wherein the receptacle socket (2) is pivotable by means of the drawbar support (5) by means of the actuating unit (7) from the operating position in a direction opposite to the receptacle opening (3) into a decoupling position, wherein, in the operating position, a straight line extending parallel to a longitudinal direction of the drawbar support (5) and through a center point (8) of the receptacle socket (2) intersects a first region (9) of the receptacle socket (2) facing away from the drawbar support (5), **characterized in that** a distance from the receptacle socket (2) to the security device (6) is half to ten times a diameter of the receptacle opening (3), in the decoupling position, the straight line extending parallel to the longitudinal direction of the drawbar support (5) and through the center point (8) of the receptacle socket (2) leads past the first region (9) of the receptacle socket (2), and an alignment of the receptacle socket (2) in the decoupling position is tilted in relation to the operating position.

2. The drawbar (1) according to Claim 1, **characterized in that** the distance from the receptacle socket (2) to the security device (6) is one to five times the diameter of the receptacle opening (3).

3. The drawbar (1) according to Claim 1 or 2, **characterized in that** a pivot angle between the operating position and the decoupling position is between 10° and 45°, in particular between 15° and 30°.

4. The drawbar (1) according to any one of Claims 1 to 3, **characterized in that** a pivot axis (10) of the security device (6) - viewed in the operating position - extends horizontally and transversely in relation to a longitudinal direction of the drawbar support (5).

5. The drawbar (1) according to any one of Claims 1 to 4, **characterized in that** the receptacle socket (2) is connected via a web (11) to the security device (6).

6. The drawbar (1) according to any one of Claims 1 to 5, **characterized in that** the receptacle socket (2) is at least indirectly fastened on a first part (12) of the security device (6), a second part (13) of the security device (6) is fastened on the drawbar support (5), and the first part (12) is pivotably connected by means of a pivot joint (14) to the second part (13).

7. The drawbar (1) according to Claim 6, **characterized in that** the parts (12, 13) of the security device (6) are connected at one end of the parts (12, 13) to the pivot joint (14), and the actuating unit (7) is arranged on an end of the parts (12, 13) opposite to this end.

8. The drawbar (1) according to Claim 6 or 7, **characterized in that** the first part (12) rests over a large area on the second part (13) in the operating position.

9. The drawbar (1) according to any one of Claims 1 to 8, **characterized in that** the actuating unit (7) comprises a hydraulic cylinder (15).

10. The drawbar (1) according to any one of Claims 1 to 8, **characterized in that** the actuating unit (7) has a security element, which can be actuated in particular by a Bowden cable, the security element, in a catch position, fixes the receptacle socket (2) in the operating position, and, in a release position, it enables a pivot of the receptacle socket (2).

11. A vehicle trailer having a drawbar (1) according to any one of Claims 1 to 10.

12. A vehicle combination having a vehicle trailer according to Claim 11 and a tractor vehicle having a driver's cab, **characterized in that** the actuating unit (7) of the security device (6) can be actuated from the driver's cab.

13. A method for disconnecting a connection between a tractor vehicle and a vehicle trailer, wherein in a connected state of the tractor vehicle to the vehicle trailer, a coupling ball (4) of the tractor vehicle is arranged in a receptacle opening (3) of a hemispherical receptacle socket (2) of the vehicle trailer, which receptacle socket (2) is connected to a drawbar support (5), wherein to disconnect the connection between the tractor vehicle and the vehicle trailer, the receptacle socket (2) is pivoted in relation to the drawbar support (5) in a direction facing away from the receptacle opening (3) into a decoupling position and is tilted at the same time, wherein the coupling ball (4) slides out of the receptacle socket (2) in the decoupling position.

## Revendications

1. Timon d'attelage (1) pour une remorque de véhicule comprenant une chape (2) hémisphérique avec une ouverture de logement (3) destinée à recevoir une boule d'attelage (4) et un support de timon (5) pour relier la chape (2) à la remorque de véhicule, la chape (2) étant reliée de façon pivotante au moyen d'un dispositif de sécurité (6) avec le support de timon (5), la chape (2) pouvant être fixée au moyen d'un dispositif d'actionnement (7) du dispositif de sécurité (6) dans une position de service, la chape (2) pouvant pivoter par rapport au support de timon (5) au moyen du dispositif d'actionnement (7) de la position de service à une position de désaccouplement dans une direction opposée à l'ouverture de logement (3), une droite parallèle à la longueur du support de timon (5) et qui passe par le centre (8) de la chape (2) coupant la première zone (9) de la chape (2) opposée au support de timon (5) dans la position de service, **caractérisé en ce qu'**une distance entre la chape (2) et le dispositif de sécurité (6) représente entre la moitié et dix fois un diamètre de l'ouverture de logement (3), **en ce que** la droite parallèle à une longueur du support de timon (5) et qui passe par le centre (8) de la chape (2) passe devant la première zone (9) de la chape (2) dans la position de désaccouplement, et **en ce qu'**une orientation de la chape (2) dans la position de désaccouplement est basculée par rapport à la position de service.

2. Timon d'attelage (1) selon la revendication 1, **caractérisé en ce que** la distance entre la chape (2) et le dispositif de sécurité (6) correspond à une fois à cinq fois le diamètre de l'ouverture de logement (3).

3. Timon d'attelage (1) selon la revendication 1 ou 2, **caractérisé en ce qu'**un angle de basculement entre la position de service et la position de désaccouplement est compris entre 10° et 45°, en particulier entre 15° et 30°.

4. Timon d'attelage (1) selon l'une des revendications 1 à 3, **caractérisé en ce qu'**un axe de pivotement (10) du dispositif de sécurité (6) passe, vu dans la position de service, à l'horizontale et transversalement par rapport au sens de la longueur du support de timon (5).

5. Timon d'attelage (1) selon l'une des revendications 1 à 4, **caractérisé en ce que** la chape (2) est reliée par une nervure (11) au dispositif de sécurité (6).

6. Timon d'attelage (1) selon l'une des revendications 1 à 5, **caractérisé en ce que** la chape (2) est fixée au moins de façon indirecte sur une première partie (12) du dispositif de sécurité (6), **en ce qu'**une deuxième partie (13) du dispositif de sécurité (6) est fixée au support de timon (5) et **en ce que** la première partie (12) est reliée de façon pivotante à la deuxième partie (13) au moyen d'une articulation rotative (14).

7. Timon d'attelage (1) selon la revendication 6, **caractérisé en ce que** les parties (12, 13) du dispositif de sécurité (6) sont reliées à une extrémité des parties (12, 13) avec l'articulation rotative (14) et **en ce que** le dispositif d'actionnement (7) est disposé à une extrémité des parties (12, 13) opposée à cette extrémité.

8. Timon d'attelage (1) selon la revendication 6 ou 7, **caractérisé en ce que** dans la position de service, la première partie (12) repose sur une grande surface sur la deuxième partie (13).

9. Timon d'attelage (1) selon l'une des revendications 1 à 8, **caractérisé en ce que** le dispositif d'actionnement (7) comprend un vérin hydraulique (15).

10. Timon d'attelage (1) selon l'une des revendications 1 à 8, **caractérisé en ce que** le dispositif d'actionnement (7) présente un élément de sûreté, en particulier pouvant être actionné par un câble Bowden, **en ce que** l'élément de sûreté, dans une position d'enclenchement, fixe la chape (2) dans la position de service et permet, dans une position de libération, un pivotement de la chape (2).

11. Remorque de véhicule avec un timon d'attelage (1) selon l'une des revendications 1 à 10.

12. Attelage de véhicules avec une remorque de véhicule selon la revendication 11 et un véhicule tracteur avec une cabine de conduite, **caractérisé en ce que** le dispositif d'actionnement (7) du dispositif de sécurité (6) peut être actionné à partir de la cabine de conduite.

13. Procédé pour la séparation d'une liaison entre un véhicule tracteur et une remorque de véhicule dans lequel, quand le véhicule tracteur est relié à la remorque de véhicule, une boule d'attelage (4) du véhicule tracteur est disposée dans une ouverture de logement (3) d'une chape (2) en forme de demi-sphère de la remorque de véhicule, laquelle chape (2) est reliée à un support de timon (5), la chape (2) étant pivotée puis basculée par rapport au support de timon (5) dans une direction opposée à l'ouverture de logement (3) vers une position de désaccouplement pour défaire la liaison entre le véhicule tracteur et la remorque de véhicule, la boule d'attelage (4) glissant hors de la chape (2) dans la position de désaccouplement.
